# FASCICULE DE BREVET EUROPEEN

(11) **EP 1 750 471 B1**
(45) Date de publication et mention de la délivrance du brevet: **10.10.2007**
(21) Numéro de dépôt: 06016227.8
(22) Date de dépôt: 03.08.2006
(51) Int. Cl.: H04Q 7/38, H04Q 7/32

(54) **Procédé d'envoi d'un message d'informations montant par un terminal mobile d'un réseau de téléphonie cellulaire**
Verfahren zum Versenden einer Nachricht in Aufwärtsrichtung von einem mobilen Endgerät eines zellularen Telefonnetzes
Method for sending an uplink information message from a mobile terminal of a cellular telephone network

(30) Priorité: 05.08.2005 FR 0508393
(43) Date de publication de la demande: 07.02.2007
(73) Titulaire: Sagem Communication S.A., 75015 Paris (FR)
(72) Inventeur: Pecqueur, Rémi, 92800 Puteaux (FR)
(74) Mandataire: Maillet, Alain

(56) Documents cités:
- WO-A-02/03719
- MORRIS D ET AL: "Mobile Terminal Location Discovery Schemes for a 'Beyond 3G' Inter-Worked Network" WORLD OF WIRELESS MOBILE AND MULTIMEDIA NETWORKS, 2005. WOWMOM 2005. SIXTH IEEE INTERNATIONAL SYMPOSIUM ON A TAORMINA-GIARDINI NAXOS, ITALY 13-16 JUNE 2005, PISCATAWAY, NJ, USA,IEEE, 13 juin 2005 (2005-06-13), pages 401-406, XP010811109 ISBN: 0-7695-2342-0

## Description

La présente invention concerne un procédé d'envoi d'un message d'informations montant d'un système de téléphonie cellulaire.

Dans un réseau de téléphonie cellulaire, tel qu'un réseau de téléphonie conforme au standard GSM (Global System for Mobile communications), ou un réseau conforme au standard DCS, ou encore un réseau conforme au standard UMTS (Universal Mobile Telecommunication System), la gestion de la mobilité de chaque terminal mobile est rendue nécessaire pour la localisation de la station de base sous la couverture de laquelle il se trouve au moment d'un appel entrant (appel réseau vers terminal). Les solutions envisagées pour cette gestion sont souvent le résultat d'un compromis entre les ressources utilisées (protocole plus ou moins complexe, gestion de bases de données, etc.) et la rapidité de recherche de la localisation. Bien souvent, ces solutions passent par la diffusion par chaque station de base du réseau concerné dans un canal descendant (station de base vers terminal) d'informations dites informations système de plusieurs natures qui permettent à chaque terminal mobile les recevant de connaître les caractéristiques de la cellule couverte par la station de base émettrice ou les caractéristiques d'une zone de plusieurs cellules. On notera que suivant la nécessité pour le terminal mobile d'acquérir avec rapidité ces informations système, elles sont diffusées plus ou moins fréquemment, allant de plusieurs diffusions par seconde à une diffusion toutes les 25 heures. De plus, on notera qu'un terminal mobile reçoit ces informations qu'il soit à l'état de veille ou à l'état de communication.

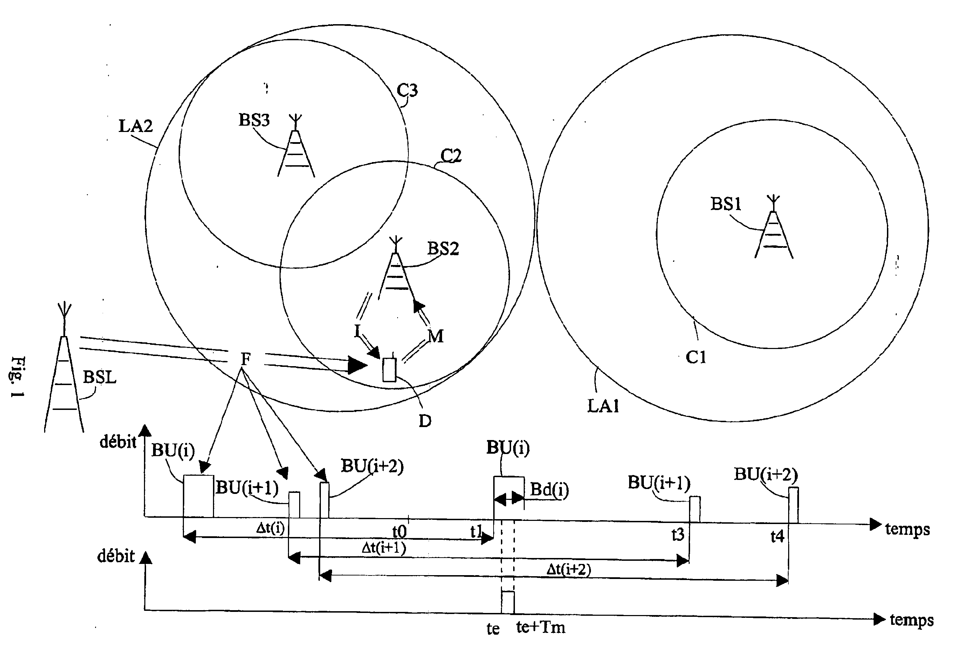

La Fig. 1 représente un réseau de téléphonie cellulaire composé de deux zones de localisation LA1 et LA2. La zone de localisation LA1 est constituée d'une cellule C1 et la zone de localisation LA2 est constituée des cellules C2 et C3. Chaque cellule Ci définit la couverture d'une unique station de base BSi.

Dans le cas d'un tel réseau de téléphonie cellulaire, par exemple le réseau GSM, les informations système I donnent l'identité du réseau de téléphonie cellulaire et les caractéristiques d'accès à ce réseau. Les informations systèmes I sont émises vers un terminal mobile D par chaque station de base BSi (i=1,2 ou 3) sur un canal dit BCCH (Broadcast Control CHannel) appartenant à une voie balise. Parmi les informations système I émises par chacune des stations de base avoisinantes du terminal mobile D, se trouvent les informations de localisation qui sont essentiellement constituées de l'identifiant de la zone de localisation LAj à laquelle ladite station de base appartient.

Les informations système I, reçues par un terminal mobile D, peuvent requérir une réponse instantanée de la part du terminal mobile D. On parle alors de messages d'informations montants c'est-à-dire de messages allant du terminal mobile D vers une station de base BSi. Le terminal mobile D ne répond pas à toutes les stations de base avoisinantes mais uniquemcnt à la station considérée comme étant la plus appropriée, en l'occurrence la station de base BS2.

Par exemple, dans le cas d'un réseau GSM, suite à la réception d'informations système et en particulier des informations de localisation, le terminal mobile D qui, dans un cycle précédent, a mémorisé la zone de localisation LA1 dans laquelle il se trouvait alors, vérifie si celle-ci a changé ou pas. Si elle a changé, il envoie un message d'information M à la station de base BS2 dans un canal montant dédié, en l'occurrence le canal RACH (Random Access CHannel) utilisé habituellement par un terminal mobile pour effectuer des requêtes de courte durée, avertissant ainsi le réseau qu'il est maintenant cntré dans la zone de localisation LA2 dont il vient de recevoir les informations de localisation à partir de la station de base BS2.

De plus, les informations système I peuvent indiquer au terminal mobile D une valeur de périodicité TP qui lui indique les temps t, t+TP, t+2TP,... auxquels il doit envoyer périodiquement un message d'informations M vers ladite station de base BS2.

Par exemple, dans le cas d'un réseau GSM, une valeur de périodicité est donnée par exemple à une horloge interne dite timer 13212 du terminal mobile D par le réseau via le canal BCCH. A partir de cette horloge, le terminal mobile envoie périodiquement un message d'informations M dans le canal RACH avertissant ainsi le réseau de la zone de localisation dont il a mémorisé l'identifiant. Ainsi, à chaque terminal mobile D du réseau, qu'il soit en état de veille ou en communication, est associée une zone de localisation LAj qui est stockée dans un registre de localisation de visiteur VLR (Visitor Location Register). Ce registre de localisation permet au réseau de déterminer la zone de localisation LAj dans laquelle se trouve un terminal mobile lorsque celui-ci est appelé.

Certains terminaux mobiles D peuvent également être équipés de moyens de réception de flux de transport F acheminant les données définissant un ou plusieurs services i, (i+1), (i+2) et transmises en mode rafale (Time slicing) par l'intermédiaire d'un autre réseau de communication que le réseau de téléphonie cellulaire auquel ils sont assujettis. Cet autre réseau est matérialisé sur la Fig. 1 par un émetteur BSL.

Le document de MORRIS D. et al., "Mobile Terminal Location Discovery Schemes for a 'Beyond 3G' Inter-Worked Network", WORLD OF WIRELESS MOBILE AND MULTIMEDIA NETWORKS, 2005, SIXTH IEEE INTERNATIONAL SYMPOSIUM ON A TAORMINA-GIARDINI NAXOS, ITALY 13-16 JUNE 2005, USA, IEEE, 13 juin 2005 décrit un tel système de l'art antérieur.

La transmission d'un service i en mode rafale consiste tout d'abord à former un groupe BU(i) de données définissant ce service. Chaque groupe BU(i) a une durée de réception égale à Bd(i). Ensuite, chaque groupe de données BU(i) est transmis après qu'un intervalle de temps Δt(i) se soit écoulé. La valeur de Δt(i), transmise avec chaque groupe de données peut être différente d'un groupe à l'autre. La valeur de cet intervalle de temps Δt(i) informe le terminal mobile D du moment où il doit activer les moyens de réception du flux de transport F. La rapidité de transmission des données définissant le service i est ainsi généralement accrue. De plus, ce mode de transmission est particulièrement intéressant pour des terminaux mobiles qui peuvent ainsi être inactifs pendant les intervalles de temps Δt(i) et ainsi économiser leurs ressources énergétiques.

Parmi ces réseaux de communication, on peut citer le réseau de diffusion de vidéos numériques pour terminaux mobiles DVB-H (Digital Video Broadcasting for Handheld terminals). Le réseau DVB-H conforme à la norme ETSI EN 302 304 est une adaptation pour terminaux mobiles du réseau DVB (Digital Video Broascasting). Mais l'invention s'applique également à tout autre réseau qui émet des services en mode rafale.

Le système de diffusion de vidéo numérique DVB est un système de diffusion de flux de transport DVB conforme à la recommandation | norme UIT-T (Union Internationale des Télécommunications) H.222.0 | ISO/IEC 13818-1 (International Standard Organisation | International Electrotechnical Commission).

Les flux de transport DVB ont été originellement définis pour véhiculer des données de flux élémentaires de type audio et vidéo codées selon la norme MPEG-2 (ISO/IEC 13818-2 et ISO/IEC 13818-3) mais ce système de diffusion de données est très largement déployé pour la diffusion d'autres types de données tels que le téléchargement de logiciels sur satellite, ou la diffusion de services Internet, pour n'en citer que quelques uns.

Un flux de transport DVB est constitué de paquets de transport MPEG-2 appelés communément paquets TS (MPEG-2 Transport Stream) du fait que leur syntaxe est conforme à la norme MPEG-2 ISO/IEC 13818-1.

Un paquet TS comporte un entête et une partie de données utiles. L'entête contient entre autre un identificateur de service PID permettant d'identifier à quel service i sont relatives les données utiles qu'il achemine Ainsi, un terminal mobile équipé de moyens de réception de flux de transport, en particulier un démodulateur de signaux DVB conforme à la norme ETSI EN 300 744, est apte à partir d'un identificateur PID à récupérer les paquets TS d'un flux de transport DVB, paquets qui acheminent les informations relatives à un service identifié par l'identificateur PID, et à présenter ce service à un utilisateur qui aurait souscrit ce service.

Le réseau de diffusion DVB-H a été introduit pour pouvoir diffuser par voie terrestre des flux de transport DVB vers un terminal mobile D ayant des ressources limitées en terme de batterie dans un environnement comportant des taux d'erreurs de transmission élevés. Pour cela, deux concepts ont été introduits par rapport aux normes ETSI EN 300 468 et ETSI EN 301 192 qui définissent un flux de transport DVB : la correction d'erreurs (Forward Error Correction, FEC) qui n'est pas en relation directe avec l'invention et la transmission en mode rafale décrite ci-dessus succinctement.

De retour à la Fig. 1, supposons qu'un utilisateur a souscrit trois services i, (i+1) et (i+2) acheminés par le flux de transport F et définis respectivement par les groupes de données BU(i), BU(i+1) et BU(i+2). Le terminal mobile D doit être apte à pouvoir activer les moyens de réception de flux de transport dès que l'un des intervalles de temps Δt(i), Δt(i+1) ou Δt(i+2) relatifs respectivement au service i, (i+1) et (i+2) est écoulé. Il est également apte à désactiver ces moyens de réception de flux de transport une fois un groupe de données reçu.

Au temps t0, le mode de réception de flux de transport est inactif. Il devient actif au temps t1 car l'intervalle de temps Δt(i) arrive à échéance. Il reste actif pendant un intervalle de temps TB(i) égal à la durée Bd(i) de réception du groupe de données BU(i) auquel il faut rajouter un délai supplémentaire correspondant entre autres au délai nécessaire pour que les moyens de réception de flux de transport, et en particulier les moyens de démodulation de signaux DVB, soient éteints.

Dans le cas où le terminal mobile D envoie un message d'informations système M d'une durée de transmission Tm à un temps te, suite à la réception d'un message d'informations I ou à l'expiration d'une horloge interne, au moment où un groupe de données, en l'occurrence le groupe BU(i) est en cours de réception, la réception du flux de transport F est généralement perturbée du fait que les fréquences utilisées par le réseau de téléphonie cellulaire et le réseau de transmission en mode rafale sont proches. C'est le cas, par exemple, du réseau GSM et du réseau DVB-H qui utilisent respectivement des fréquences de 800 à 900 MHz et de 400 à 700 MHz. Cette perturbation a pour effet de dégrader la qualité du ou des services présentés à l'utilisateur.

Le but de la présente invention est donc de résoudre le problème soulevé ci-dessus de la perturbation de la réception en mode rafale d'un flux de transport par l'envoi d'un message d'informations montant d'un réseau de téléphonie cellulaire.

Pour ce faire, un procédé d'envoi d'un message d'informations montant par un terminal mobile d'un réseau de téléphonie cellulaire, ledit terminal étant équipé de moyens de réception de flux de transport acheminant des services ou programmes transmis en mode rafale par un autre réseau de communication, ledit message d'informations montant devant être envoyé à un temps d'envoi, est caractérisé en ce qu'il comporte :
- une étape de vérification de l'activation desdits moyens de réception de flux de transport audit temps d'envoi,
- dans le cas où lesdits moyens de réception sont inactifs audit temps d'envoi, une étape d'envoi dudit message d'informations montant audit temps d'envoi à partir d'un canal dédié dudit réseau de téléphonie cellulaire, et
- dans le cas où lesdits moyens de réception sont actifs audit temps d'envoi, une étape d'envoi dudit message d'informations montant à un temps d'envoi modifié à partir d'un canal dédié dudit réseau de téléphonie cellulaire.

Selon un mode de réalisation de la présente invention, l'étape d'envoi dudit message d'informations montant à un temps d'envoi modifié comporte :
- une étape de détermination à partir dudit temps d'envoi d'un intervalle de temps d'activation pendant lequel lesdits moyens de réception restent actifs, et
- une étape d'ajout de la valeur dudit intervalle de temps d'activation audit temps d'envoi.

Selon un mode de réalisation de la présente invention, ledit temps d'envoi étant déterminé suite à l'expiration d'une horloge interne audit terminal mobile réinitialisée à une valeur de périodicité donnée dès que l'horloge atteint ladite valeur de périodicité, au cours de l'étape d'ajout, la valeur dudit intervalle de temps d'activation est ajoutée à ladite valeur de périodicité de ladite horloge interne.

Selon un autre mode de réalisation de la présente invention, chaque service ou programme acheminé par ledit flux de transport étant associé à une valeur de priorité, et au moins un desdits services ou programmes souscrits ayant une valeur de priorité inférieure à la valeur de priorité attribuée à l'envoi dudit message d'informations montant, l'étape de modification dudit temps d'envoi est suivie par :
- une étape de calcul d'un intervalle de temps d'inactivité pendant lequel lesdits moyens de réception restent inactifs,
- une étape de comparaison entre la valeur dudit intervalle de temps d'inactivité et la valeur de l'intervalle de temps d'émission nécessaire à l'émission dudit message d'informations montant,
- dans le cas où la valeur dudit intervalle de temps d'inactivité est inférieure à la valeur dudit intervalle de temps d'émission, une étape de dé-souscription du ou des services auxquels a été attribuée une valeur de priorité inférieure à la valeur de priorité attribuée à l'envoi dudit message d'informations. De plus, l'étape d'envoi dudit message d'informations montant est suivie d'une étape de souscription audits services dé-souscrits.

Selon un mode de réalisation de la présente invention ledit réseau de téléphonie cellulaire est un réseau de type GSM.

Selon un autre mode de réalisation, ledit autre réseau de communication est un réseau de type DVB.

La présente invention concerne également un terminal mobile mettant en oeuvre la présente invention.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente un schéma illustrant les échanges de messages d'informations entre un terminal mobile et un réseau de téléphonie cellulaire et la réception par le terminal mobile d'un flux de transport acheminant des services émis en mode rafale selon l'état de la technique.
La Fig. 2 représente un diagramme des étapes successives du procédé d'envoi d'un message d'informations montant selon la présente invention.
La Fig. 3 représente une illustration d'un mode de réalisation de la présente invention.
La Fig. 4a représente un diagramme des étapes d'un autre mode de réalisation de la présente invention.
Les Fig. 4b et 4c représentent des illustrations du mode de réalisation décrit en relation avec la Fig. 4a.
La Fig. 5 représente un schéma d'un terminal mobile mettant en oeuvre la présente invention.

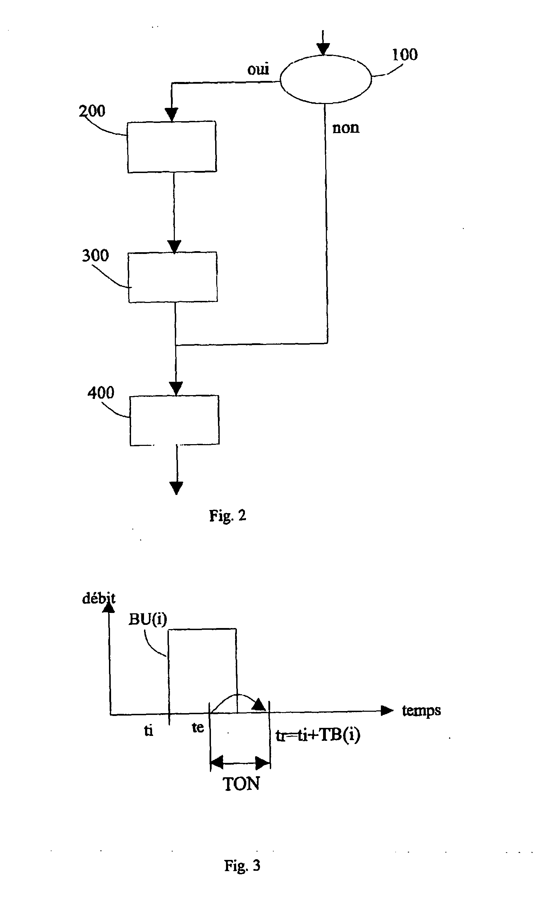

La Fig. 2 représente un diagramme des étapes successives du procédé d'envoi d'un message d'informations montant M à un temps d'envoi te par un terminal mobile D d'un réseau de téléphonie cellulaire selon la présente invention. Le terminal mobile D est équipé de moyens de réception de flux de transport acheminant des services transmis en mode rafale par un autre réseau de communication. Le procédé d'envoi débute par une étape 100 de vérification de l'activation des moyens de réception de flux de transport du terminal mobile D. Dans le cas où les moyens de réception de flux de transport sont inactifs au temps d'envoi te, le message d'informations montant M est envoyé classiquement au temps te à travers un canal dédié (étape 400). Dans le cas où les moyens de réception de flux de transport sont actifs au temps d'envoi te, l'étape 100 est suivie d'une étape 200 de détermination à partir du temps d'envoi te d'un intervalle de temps d'activation TON pendant lequel les moyens de réception restent actifs, d'une étape 300 d'ajout de la valeur de l'intervalle de temps d'activation TON à cette valeur du temps d'envoi te, et de l'étape 400 décrite précédemment.

Selon un mode de réalisation de la présente invention décrit en relation avec la Fig. 3, la valeur du temps d'envoi te a été déterminée suite à la réception d'un message d'informations I descendant. Au temps te, le message M doit être envoyé. Cependant, au temps te, un groupe de données BU(i) acheminé par le flux de transport F est en cours de réception jusqu'au temps ti+TB(i). Le temps TON est égal à ti+TB(i)-te (étape 200). Au cours de l'étape 300, la valeur du temps d'envoi te une fois modifiée est égale à tr=ti+TB(i), valeur de temps à laquelle le message d'informations M est envoyé (étape 400).

Selon un autre mode de réalisation de la présente invention, la valeur du temps d'envoi te a été déterminée suite à l'apparition d'un événement survenant périodiquement tel que l'expiration d'une horloge, par exemple le timer t3212 du système GSM. Au cours de l'étape 300 la valeur de l'intervalle de temps TON=ti+TB(i)-te est ajoutée à la valeur de périodicité TP de cette horloge, obtenant ainsi une valeur du temps d'envoi modifié tr=TP+TON correspondant dans le cas de la Fig. 3 à la valeur ti+TB(i).

Un flux de transport, par exemple de type DVR-H, achemine des services auxquels peut avoir été attribuée une valeur de priorité. Une valeur élevée de priorité est généralement attribuée aux services, par exemple de diffusion de programmes de télévision, alors qu'une valeur faible de priorité est plutôt attribuée à des services tels qu'un service de prévisions météorologiques par exemple. On parle alors de services haute priorité et de services basse priorité. Par service basse priorité il faut entendre un service dont l'importance est moindre comparée à celle d'envoyer un message d'informations M montant.

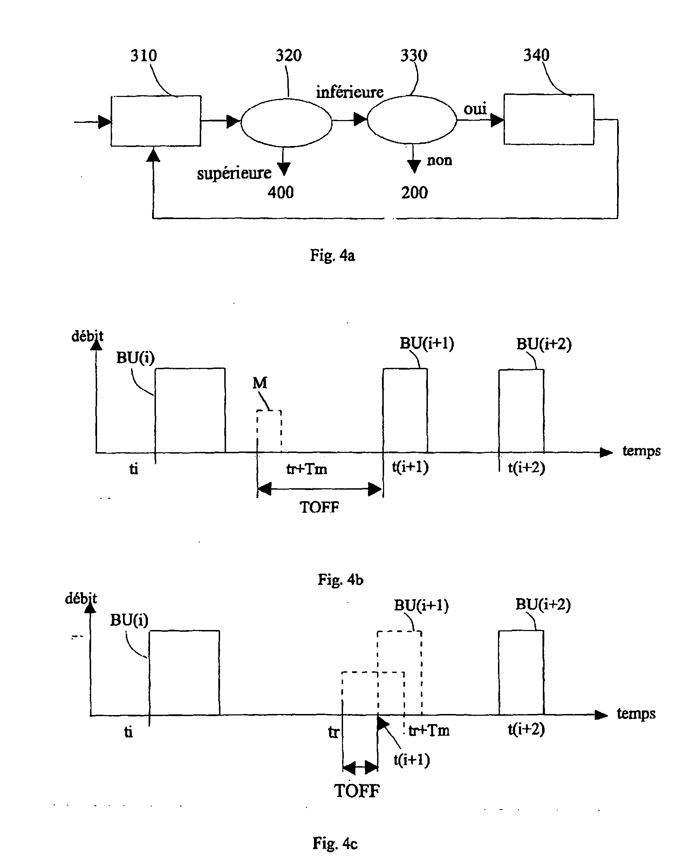

Selon l'exemple des Fig. 4b et 4c, admettons que le service B(i) soit un service haute priorité et que les services BU(i+1) et BU(i+2) soient des services basse priorité souscrits par un utilisateur.

Selon un mode de réalisation de la présente invention représenté à la Fig. 4a, l'étape 400 d'envoi d'un message d'informations M est précédée d'une étape 310 de calcul d'un intervalle de temps d'inactivité TOFF pendant lequel les moyens de réception de flux de transport restent inactifs à partir du temps d'envoi modifié tr. On rappelle que la valeur du temps d'envoi tr est, soit égale à la valeur du temps d'envoi te dans le cas où les moyens de réception de flux de transport sont inactifs au temps te initial, soit modifiée au cours de l'étape 300. L'intervalle TOFF est défini par la différence entre la valeur de temps t(i+1) de début de réception d'un prochain groupe de datagrammes BU(i) et la valeur de temps tr.

L'étape 310 est suivie d'une étape 320 au cours de laquelle la valeur de l'intervalle de temps TOFF est comparée à la valeur de l'intervalle de temps Tm nécessaire à l'envoi du message d'informations M.

Dans le cas représenté par la Fig. 4b où la valeur de l'intervalle de temps TOFF est supérieure ou égale à la valeur Tm, l'étape 320 est suivie de l'étape 400 précédemment décrite.

Dans le cas représenté par la Fig. 4c où la valeur de l'intervalle de temps TOFF est inférieure à la valeur Tm, l'étape 320 est suivie d'une étape 330 au cours de laquelle il est testé si le groupe de datagrammes BU(i+1) correspond à des données d'un service basse priorité. Dans la négative, l'étape 330 est suivie de l'étape 200 décrite précédemment. Dans l'affirmative, l'étape 330 est suivie d'une étape 340 au cours de laquelle le terminal mobile D dé-souscrit le service basse priorité BU(i+1) (représenté en trait discontinu sur la Fig. 4c). L'étape 340 est alors suivie de l'étape 310 décrite précédemment en considérant le prochain groupe de datagrammes BU(i+2).

Toujours selon ce mode de réalisation, dans le cas où le terminal a dé-souscrit un ou plusieurs services basse priorité, l'étape 400 d'envoi du message d'informations montant M est suivie d'une étape 500 de re-souscription à ce ou ces services (étape non représentée sur les Fig.).

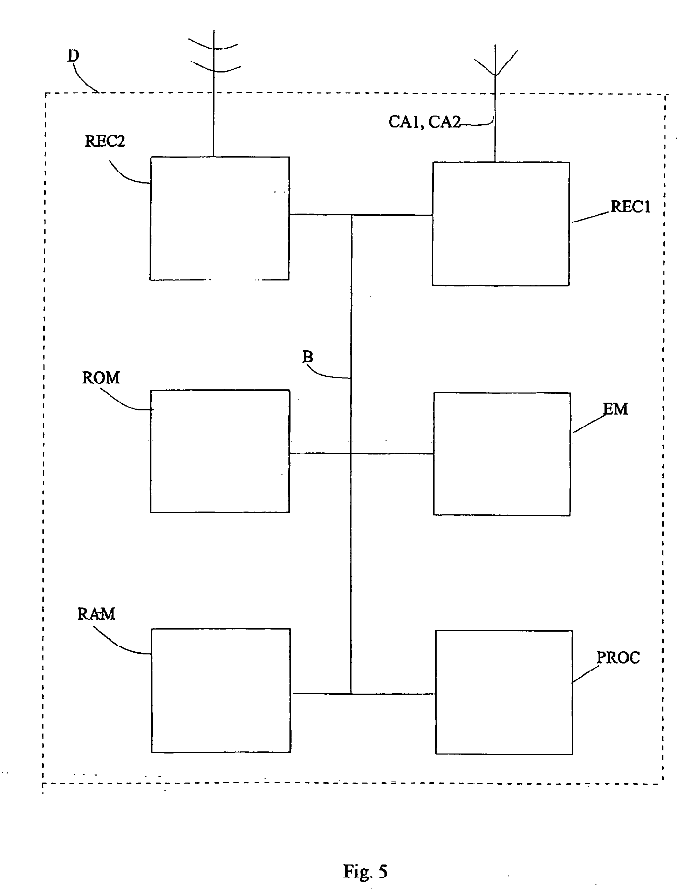

La Fig. 5 représente un schéma d'un terminal mobile D mettant en oeuvre la présente invention. Le terminal D est adapté à mettre en oeuvre, par exemple au moyen d'un logiciel qu'il incorpore, les étapes du procédé d'envoi d'un message d'informations montant M selon un des modes de réalisation de la présente invention décrit en relation avec la Fig. 2 et la Fig. 4a.

Le terminal D est par exemple, de manière non limitative, un dispositif de communication tel qu'un téléphone mobile, un assistant personnel ou un ordinateur portable. Il comporte essentiellement un bus de communication B auquel sont reliés un processeur PROC, une mémoire non volatile ROM, une mémoire vive RAM, une unité REC1 de réception de signaux portant un message d'informations système émanant d'un réseau de téléphonie cellulaire par l'intermédiaire d'un canal dédié CA1, une unité EM d'émission de signaux portant un message d'informations montant vers le réseau de téléphonie cellulaire par l'intermédiaire d'un autre canal dédié CA2, et d'une unité REC2 de réception de flux de transport émis en mode rafale par un autre réseau de communication.

La mémoire non volatile ROM mémorise les programmes et les données permettant entre autres la mise en oeuvre des étapes du procédé de changement de programmes telles que décrites à la Fig. 2 et à la Fig. 4a.

L'unité de réception REC2 comporte des moyens pour recevoir un signal radiofréquence portant au moins un flux de transport transmis en mode rafale, des moyens pour démoduler ce signal radiofréquence, et des moyens pour activer et désactiver les moyens pour recevoir et démoduler.

Le terminal D comporte également des moyens pour vérifier l'activation des moyens de réception et de démodulation de l'unité de réception REC2.

Lors de la mise sous tension du terminal D, les programmes du logiciel sont transférés de la mémoire ROM dans la mémoire vive RAM qui contient alors le code exécutable et les données nécessaires à la mise en oeuvre de l'un des modes de réalisation suivants.

Selon un mode de réalisation de la présente invention, le terminal D comporte des moyens pour déterminer à partir d'un temps d'envoi (te) un intervalle de temps d'activation (TON) pendant lequel lesdits moyens de réception et de démodulation de l'unité REC2 restent actifs, et des moyens pour ajouter la valeur d'un intervalle de temps d'activation (TON) à la valeur d'un temps d'envoi.

Selon un autre mode de réalisation, les moyens pour démoduler sont du type DVB c'est-à-dire conformes à la norme ETSI EN 300 744.

Selon un autre mode de réalisation, le réseau de téléphonie cellulaire est un réseau GSM.

Selon un autre mode de réalisation du dispositif mobile D, le dispositif mobile D comporte des moyens pour calculer un intervalle de temps d'inactivité TOFF pendant lequel les moyens de réception et de démodulation de l'unité REC2 restent inactifs, des moyens de comparaison entre la valeur d'un intervalle de temps TOFF et la valeur d'un intervalle de temps d'émission Tm d'un message d'informations M, des moyens pour déterminer la priorité d'un service à partir des données qui le définissent et des moyens pour souscrire et dé-souscrire un service basse priorité.

## Revendications

1. Procédé d'envoi d'un message d'informations montant par un terminal mobile d'un réseau de téléphonie cellulaire, ledit terminal étant équipé de moyens de réception de flux de transport acheminant des services ou programmes transmis en mode rafale par un autre réseau de communication, ledit message d'informations montant devant être envoyé à un temps d'envoi (te), **caractérisé en ce qu'**il comporte :
- une étape (100) de vérification de l'activation desdits moyens de réception de flux de transport audit temps d'envoi (te),
- dans le cas où lesdits moyens de réception sont inactifs audit temps d'envoi (te), une étape d'envoi dudit message d'informations montant audit temps d'envoi (te) à partir d'un canal dédié dudit réseau de téléphonie cellulaire, et
- dans le cas où lesdits moyens de réception sont actifs audit temps d'envoi (te), une étape d'envoi dudit message d'informations montant à un temps d'envoi modifié (tr) à partir d'un canal dédié dudit réseau de téléphonie cellulaire.

2. Procédé d'envoi d'un message d'informations montant selon la revendication 1, **caractérisé en ce que** l'étape d'envoi dudit message d'informations montant à un temps d'envoi modifié (tr) comporte :
- une étape (200) de détermination à partir dudit temps d'envoi (te) d'un intervalle de temps d'activation (TON) pendant lequel pendant lequel lesdits moyens de réception restent actifs, et
- une étape (300) d'ajout de la valeur dudit intervalle de temps d'activation (TON) audit temps d'envoi (te).

3. Procédé d'envoi d'un message d'informations montant selon la revendication 2, ledit temps d'envoi (te) étant déterminé suite à l'expiration d'une horloge interne audit terminal mobile réinitialisée à une valeur de périodicité donnée dès que l'horloge atteint ladite valeur de périodicité, **caractérisé en ce qu'**au cours de l'étape (300) d'ajout, la valeur dudit intervalle de temps d'activation (TON) est ajoutée à ladite valeur de périodicité de ladite horloge interne.

4. Procédé selon l'une des revendications précédentes, chaque service ou programme acheminé par ledit flux de transport étant associé à une valeur de priorité, et au moins un desdits services ou programmes souscrits ayant une valeur de priorité inférieure à la valeur de priorité attribuée à l'envoi dudit message d'informations montant, **caractérisé**
- **en ce que** l'étape (300) de modification dudit temps d'envoi est suivie par :
- une étape (310) de calcul d'un intervalle de temps d'inactivité (TOFF) pendant lequel lesdits moyens de réception restent inactifs,
- une étape (320) de comparaison entre la valeur dudit intervalle de temps d'inactivité (TOFF) et la valeur de l'intervalle de temps d'émission (T(m)) nécessaire à l'émission dudit message d'informations montant,
- dans le cas où la valeur dudit intervalle de temps d'inactivité (TOFF) est inférieure à la valeur dudit intervalle de temps d'émission (T(m)), une étape (330) de dé-souscription du ou des services auxquels a été attribuée une valeur de priorité inférieure à la valeur de priorité attribuée à l'envoi dudit message d'informations.
- et **en ce que** l'étape (400) d'envoi dudit message d'informations montant est suivie d'une étape (410) de souscription audits services dé-souscrits.

5. Procédé d'envoi d'un message d'informations montant selon l'une des revendications précédentes, **caractérisé en ce que** ledit réseau de téléphonie cellulaire est un réseau de type GSM.

6. Procédé d'envoi d'un message d'informations montant selon l'une des revendications précédentes, **caractérisé en ce que** ledit autre réseau de communication est un réseau de type DVB.

7. Terminal mobile d'un réseau de téléphonie cellulaire, ledit terminal étant équipé de moyens de réception de flux de transport acheminant des services ou programmes transmis en mode rafale par un autre réseau de communication, **caractérisé en ce qu**'il comporte :
- des moyens pour vérifier l'activation desdits moyens de réception de flux de transport,
- des moyens pour déterminer à partir d'un temps donné un intervalle de temps d'activation pendant lequel lesdits moyens de réception restent actifs,
- des moyens pour modifier un temps donné en lui ajoutant la valeur d'un intervalle de temps d'activation, et
- des moyens pour envoyer un message d'informations montant à partir d'un canal dédié dudit réseau de téléphonie cellulaire.

## Claims

1. Method for sending an uplink information message by a mobile terminal of a cellular telephone network, the said terminal being equipped with means for receiving transport streams conveying services or programmes which are transmitted in the time slicing mode by another communications network, the said uplink information message having to be sent at a sending time (te), **characterised in that** it comprises:
- a step (100) of verifying that the said means for receiving transport streams are switched on at the said sending time (te),
- in the event of the said receiving means being switched off at the said sending time, a step of sending the said uplink information message from a dedicated channel belonging to the said cellular telephone network at the said sending time (te), and
- in the event of the said receiving means being switched on at the said sending time (te), a step of sending the said uplink information message from a dedicated channel belonging to the said cellular telephone network at a sending time (tr) which is modified.

2. Method for sending an uplink information message, **characterised in that** the step of sending the said uplink information message at a sending time (tr) which is modified comprises:
- a step (200) of determining from the said sending time (te) a switched-on time interval (TON) during which the said receiving means remain switched on, and
- a step (300) of adding the value of the said switched-on time interval (TON) to the said sending time (te).

3. Method for sending an uplink information message according to claim 2, the said sending time (te) being determined as a result of the expiry of a period timed by a timer internal to the said mobile terminal which is re-initialised to a given periodicity value as soon as the timer reaches the said periodicity value, **characterised in that** the value of the said switched-on time interval (TON) is added to the said periodicity value of the said internal timer in the course of the adding step (300).

4. Method according to one of the foregoing claims, each service or programme conveyed by the said transport stream being associated with a priority value, and at least one of the said services or programmes subscribed to having a priority value which is lower than the priority value assigned to the sending of the said uplink information message, **characterised in that**
- the step (300) of modifying the said sending time is followed by:
- a step (310) of calculating a switched-off time interval (TOFF) during which the said receiving means remain switched off,
- a step (320) of making a comparison between the value of the said switched-off time interval (TOFF) and the value of the transmission time interval (T(m)) required for transmitting the said uplink information message,
- in the event of the value of the said switched-off time interval (TOFF) being less than the value of the said transmission time interval (T(m)), a step (330) of de-subscription from that service or those services to which a priority value was assigned which was lower than the priority value assigned to the sending of the said information message,
- and **in that** the step (400) of sending the said uplink information message is followed by a step (410) of subscribing to the said services which have been de-subscribed from.

5. Method for sending an uplink information message according to one of the foregoing claims, **characterised in that** the said cellular telephone network is a network of the GSM type.

6. Method for sending an uplink information message according to one of the foregoing claims, **characterised in that** the said other communications network is a network of the DVB type.

7. Mobile terminal of a cellular telephone network, the said terminal being equipped with means for receiving transport streams conveying services or programmes which are transmitted in the time slicing mode by another communications network, **characterised in that** it comprises:
- means for verifying whether the said means for receiving transport streams are switched on,
- means for determining from a given time a switched-on time interval during which the said receiving means remain switched on,
- means for modifying a given time by adding thereto the value of a switched-on time interval, and
- means for sending an uplink information message from a dedicated channel belonging to the said cellular telephone network.

## Patentansprüche

1. Verfahren zum Senden einer Informationsnachricht in Aufwärtsrichtung durch ein mobiles Terminal eines Zelltelefonienetzes, wobei das Terminal mit Mitteln zum Empfangen von Transportströmen versehen ist, die Dienste oder Programme befördern, die im Burstmodus von einem anderen Kommunikationsnetz gesendet werden, und wobei die Informationsnachricht in Aufwärtsrichtung zu einer Sendezeit (te) gesendet werden muss, **dadurch gekennzeichnet, dass** es Folgendes aufweist:
- einen Schritt (100) zum Prüfen des Aktivierens der Empfangsmittel für den Transportstrom zu der Sendezeit (te),
- in dem Fall, in dem die Empfangsmittel zu der Sendezeit (te) inaktiv sind, einen Schritt des Sendens der Informationsnachricht in Aufwärtsrichtung zu der Sendezeit (te) ausgehend von einem dedizierten Kanal des Zelltelefonienetzes, und
- in dem Fall, in dem die Empfangsmittel zu der Sendezeit (te) aktiv sind, einen Schritt des Sendens der Informationsnachricht in Aufwärtsrichtung zu einer modifizierten Sendezeit (tr) ausgehend von einem dedizierten Kanal des Zelltelefonienetzes.

2. Verfahren zum Senden einer Informationsnachricht in Aufwärtsrichtung nach Anspruch 1, **dadurch gekennzeichnet, dass** der Schritt des Sendens der Informationsnachricht in Aufwärtsrichtung zu einer modifizierten Sendezeit (tr) Folgendes aufweist:
- einen Schritt (200) des Bestimmens ausgehend von der Sendezeit (te) eines Aktivierungszeitintervalls (TON) während dem die Empfangsmittel aktiv bleiben, und
- einen Schritt (300) zum Hinzufügen des Werts des Aktivierungszeitintervalls (TON) zu der Sendezeit (te) .

3. Verfahren zum Senden einer Informationsnachricht in Aufwärtsrichtung nach Anspruch 2, wobei die Sendezeit (te) im Anschluss an das Ablaufen eines internen Taktgebers an dem mobilen Terminal bestimmt wird, der, sobald der Taktgeber den Wert der Periodizität erreicht hat, auf einen Wert mit gegebener Periodizität neu initialisiert wird, **dadurch gekennzeichnet, dass** im Laufe des Schritts (300) des Hinzufügens der Wert des Aktivierungszeitintervalls (TON) zu dem Periodizitätswert des internen Taktgebers hinzugefügt wird.

4. Verfahren nach einem der vorhergehenden Ansprüche, wobei jeder Dienst oder jedes Programm, der/das von dem Transportstrom befördert wird, mit einem Vorrangwert verbunden ist, und wobei mindestens einer der abonnierten Dienste oder eines der abonnierten Programme, einen Vorrangwert hat, der kleiner ist als der Vorrangwert, der dem Senden der Informationsnachricht in Aufwärtsrichtung zugeordnet ist, **dadurch gekennzeichnet,**
- **dass** auf den Schritt (300) des Änderns der Sendezeit Folgendes folgt:
- ein Schritt (310) des Berechnens eines Inaktivitätszeitintervalls (TOFF), während dem die Empfangsmittel inaktiv bleiben,
- ein Schritt (320) des Vergleichens zwischen dem Wert des Inaktivitätsintervalls (TOFF) und dem Wert des Sendezeitintervalls (T(mm)), das zum Senden der Informationsnachricht in Aufwärtsrichtung erforderlich ist,
- in dem Fall, in dem der Wert des Inaktivitätsintervalls (TOFF) kleiner ist als der Wert des Sendezeitintervalls (T(m)), ein Schritt (330) des Deabonnierens von dem oder den Diensten, welchen ein Vorrangwert kleiner als der Vorrangwert zugewiesen wurde, der dem Senden der Informationsnachricht zugewiesen ist.
- und **dass** auf den Schritt (400) des Sendens der Informationsnachricht in Aufwärtsrichtung ein Schritt (410) des Deabonnierens der deabonnierten Dienste folgt.

5. Verfahren zum Senden einer Informationsnachricht in Aufwärtsrichtung nach einem der vorhergehenden Ansprüche, **dadurch gekennzeichnet, dass** das Zelltelefonienetz ein Netz des Typs GSM ist.

6. Verfahren zum Senden einer Informationsnachricht in Aufwärtsrichtung nach einem der vorhergehenden Ansprüche, **dadurch gekennzeichnet, dass** das andere Kommunikationsnetz ein Netz des Typs DVB ist.

7. Mobiles Terminal eines Zelltelefonienetzes, wobei das Terminal mit Empfangsmitteln des Transportstroms ausgestattet ist, der Dienste oder Programme befördert, die im Burstmodus von einem anderen Kommunikationsnetz gesendet werden, **dadurch gekennzeichnet, dass** es Folgendes aufweist:
- Mittel zum Prüfen des Aktivierens der Empfangsmittel des Transportstroms,
- Mittel, um ausgehend von einer gegebenen Zeit ein Aktivierungszeitintervall zu bestimmen, während dem die Empfangsmittel aktiv bleiben,
- Mittel zum Ändern einer gegebenen Zeit, indem zu ihr der Wert eines Aktivierungszeitintervalls hinzugefügt wird,
- Mittel zum Senden einer Informationsnachricht in Aufwärtsrichtung ausgehend von einem dedizierten Kanal des Zelltelefonienetzes.
